# EUROPEAN PATENT APPLICATION

(11) **EP 4 467 223 A1**
(43) Date of publication of application: **27.11.2024**
(21) Application number: 22922296.3
(22) Date of filing: 17.06.2022
(51) Int. Cl.: B01D 53/14, B01D 47/02, B01D 53/78, B01D 53/79, B01D 53/30

(54) **SYSTEM FOR CREATING ARTIFICIAL FOREST**

(30) Priority: 21.01.2022 KR 20220009387
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/008603
(87) International publication number: WO 2023/140437

(57) **Abstract**

Proposed is a system for creating an artificial forest. The system includes a suction pipe that suctions air, a circulation pipe forming a passage through which air suctioned from the suction pipe circulates, a plurality of air diffusers branched from the circulation pipe and configured to diffuse and supply air in the form of fine bubbles in a chamber, the chamber collecting carbon dioxide in air by reacting the air supplied from the plurality of air diffusers and a pre-stored basic alkaline mixture solution with each other, a separator collecting a reactant containing carbon dioxide collected in the chamber and separating a carbon dioxide reactant and a waster solution from the reactant, a carbon resource storage storing the separated carbon dioxide reactant for recycling the carbon dioxide reactant, and a discharge pipe discharging a residual air in which carbon dioxide collected in the chamber is removed.

## Description

### Technical Field

The present disclosure relates to a system for creating an artificial forest. More particularly, the present disclosure relates to a system for creating an artificial forest, the system being configured to use a basic alkaline mixture solution such that carbon dioxide in air is collected and converted into a carbon resource so that carbon dioxide in air is removed and also carbon dioxide in air is recycled into other useful carbon resources, and the system being also configured to continuously supply artificially purified clean air.

### Background Art

Recently, various natural disasters are rapidly increasing around the world due to heat waves, great floods, forest fires, climate change, and so on. The increase in carbon dioxide in the atmosphere is considered as the main cause of this rapid increase in natural disasters.

The global atmospheric carbon dioxide concentration reached an all-time high in 2020, and each country's carbon emission reduction plans fell short of expectations. Furthermore, it is predicted that carbon emissions will increase by 16% by 2030 compared to 2010. If this trend continues, it is predicted that it will be difficult to achieve the international target of suppressing the increase in global temperature by 1.5 degrees Celsius higher than before industrialization, and that the global temperature will rise by 2.7 degrees Celsius by 2100.

In addition, according to the World Meteorological Organization (WMO), the average global atmospheric carbon dioxide concentration reached 413.2 ppm in 2020, which is 2.5 ppm higher than in 2019 and which is an all-time high. The increase in carbon dioxide concentration of last year showed a rapid increase, which exceeds the average (2.4 ppm) of the past 10 years. Such carbon dioxide concentration is 149% of the carbon dioxide concentration in the pre-industrial period (1750s).

Experts point out that the reason the carbon dioxide in the atmosphere continues to increase is because of the characteristic that carbon dioxide stays in the atmosphere for up to 200 years once carbon dioxide is emitted. Due to this characteristic, there is a growing need to reduce carbon emissions more rapidly in order for the world to avoid natural disasters caused by carbon dioxide.

In addition, the WMO is concerned that the carbon absorption capacity of the land ecosystem is decreasing since the Amazon area, which has absorbed carbon, has changed into a source of carbon emissions due to the development by the Brazilian government.

As described above, while carbon dioxide is rapidly increasing worldwide and the need to reduce carbon dioxide is recognized, the carbon absorption capability of the land ecosystem alone has limitation of properly performing the carbon reduction function.

Meanwhile, although a technology to purify dusts and motes from air has been actively developed, a technology to collect carbon dioxide continuously and utilize collected carbon dioxide generated according to the collection of carbon dioxide has not been developed well, so that technological development thereof is required.

### Disclosure

### Technical Problem

Accordingly, the present disclosure has been made keeping in mind the above problems occurring in the related art, and an objective of the present disclosure is to provide a system for creating an artificial forest, the system being capable of continuously reducing carbon dioxide in air so that a surrounding air quality is transformed into a clean and comfortable environment.

In addition, another objective of the present disclosure is to provide a system for creating an artificial forest, the system being configured to use a basic alkaline mixture solution such that carbon dioxide in air is collected and converted into a carbon resource so that carbon dioxide in air is removed and also carbon dioxide in air is recycled into other useful carbon resource.

In addition, still another objective of the present disclosure is to provide a system for creating an artificial forest, the system being configured to measure a carbon dioxide concentration before and after carbon dioxide existing in air is collected and to display a reduced carbon dioxide concentration on a display portion, the system being configured to provide changes in a carbon dioxide concentration in air to a local government or a manager so that the local government or the manager is capable of appropriately using the changes in the carbon dioxide concentration in air, or the system being capable of appropriately responding to the changes in the carbon dioxide concentration.

In addition, yet another objective of the present disclosure is to provide a system for creating an artificial forest, the system being configured to collect carbon dioxide by using a basic alkaline mixture solution that solves various disadvantages of an aqueous alkanolamine solution which is a carbon dioxide absorber and which is widely used in a conventional technology, thereby being capable of securing economic feasibility compared to the conventional technology.

The technical problems to be solved by the present disclosure are not limited to the above-mentioned problems, and other problems which are not mentioned will be clearly understood by those skilled in the art from the following description.

### Technical Solution

In order to achieve the above objectives, according to an embodiment of the present disclosure, there is provided a system for creating an artificial forest, the system including: a suction pipe configured to suction air; a circulation pipe forming a passage through which air suctioned from the suction pipe is circulated; a plurality of air diffusers branched from the circulation pipe and configured to diffuse and supply air in a form of fine bubbles in a chamber; the chamber configured to collect carbon dioxide in air by reacting the air in the form of fine bubbles supplied from the plurality of air diffusers and a pre-stored basic alkaline mixture solution with each other; a separator configured to collect a reactant containing carbon dioxide collected in the chamber and to separate a carbon dioxide reactant and a waster solution from the reactant; a carbon resource storage configured to store the separated carbon dioxide reactant for recycling the carbon dioxide reactant; and a discharge pipe configured to discharge a residual air in which carbon dioxide collected in the chamber is removed.

In addition, the suction pipe may have a first side coupled to the circulation pipe, and may be configured to suction air through a suction pump formed in a middle portion of the suction pipe.

In addition, the circulation pipe may be formed such that the circulation pipe surrounds an outer circumference of the chamber.

In addition, each middle portion of the plurality of air diffusers may penetrate the chamber and may be connected to the chamber, and both distal ends of the plurality of air diffusers may be in communication with an inner portion of the circulation pipe.

In addition, the plurality of air diffusers may be an apparatus configured to diffuse air into the basic alkaline mixture solution and provided with an air diffusing pipe and an air diffusing plate, and a membrane disk having a stretchable material and having a surface provided with a plurality of air diffusing holes may be mounted on the air diffusing plate.

In addition, an inlet portion into which the basic alkaline mixture solution is introduced may be formed on an outside of the chamber, and the basic alkaline mixture solution mixed by a mixer may be introduced into and stored in the chamber through a nozzle connected to the inlet portion.

In addition, the mixer may be configured to mix a basic alkaline solution supplied from a basic alkaline solution reservoir with water supplied from a water supply source.

In addition, the basic alkaline solution and the water may be mixed in a ratio of 1:1 to 1:5.

In addition, an average pH of the basic alkaline mixture solution may be pH 12 to pH 13.5.

In addition, the basic alkaline mixture solution may include: at least one oxide selected from a group consisting of SiO₂, Al₂O₃, Fe₂O₃, TiO₂, MgO, MnO, CaO, Na₂O, K₂O and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, the basic alkaline mixture solution may be input by being adjusted through a valve in the mixer when a level of the basic alkaline mixture solution in the chamber is lowered to less than 90%, and inputting of the basic alkaline mixture solution may be stopped and, at the same time, a basic alkaline solution and water may be mixed until a pH of the basic alkaline mixture solution becomes pH 12 to pH 13.5 when the level of the basic alkaline mixture solution becomes 100%.

In addition, the carbon dioxide reactant may include sodium carbonate (Na₂CO₃) or sodium bicarbonate (NaHCO₃).

In addition, the system may further include: an input part configured to input a collection date of carbon dioxide, a time, a measurement interval, a measurement start time for measuring a carbon dioxide concentration value, a measurement end time for ending the measurement of the carbon dioxide concentration value, a measurement period, and an atmospheric pressure; a sensor part configured to measure, at the measurement interval, a carbon dioxide concentration value in air suctioned through the suction pipe and a carbon dioxide concentration value after collecting carbon dioxide and to transmit the carbon dioxide concentration values to a control unit; a monitoring part configured to monitor a level and a pH of the basic alkaline mixture solution in the chamber; the control unit configured to adjust a supply amount of the basic alkaline mixture solution by the monitoring part and to control an operation of each part by determining a sensor value measured from the sensor part; a storage part configured to store the carbon dioxide concentration value in air and the carbon dioxide concentration value after collecting carbon dioxide that are measured at the measurement interval, and a concentration change amount before and after collecting carbon dioxide; a communication part configured to remotely transmit the carbon dioxide concentration value in air, the carbon dioxide concentration value after collecting carbon dioxide, and the concentration change amount before and after collecting carbon dioxide that are stored in the storage part in real time or at regular intervals to a server or a terminal that a user desires; and a display part configured to display the carbon dioxide concentration value in air and the carbon dioxide concentration value after collecting carbon dioxide that are measured by the sensor part at the measurement interval, and the concentration change amount before and after collecting carbon dioxide.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, since carbon dioxide is capable of being reduced by collecting carbon dioxide in air like a tree, there is an advantage that an air quality around a region where a system of the present disclosure is established is improved.

In addition, according to an embodiment of the present disclosure, by using the collected carbon dioxide, sodium carbonate or sodium bicarbonate, which is a useful resource, is capable of being manufactured. Sodium carbonate or sodium bicarbonate may be utilized in various industrial fields, so that there is an advantage that increased economic feasibility compared to the conventional technology is secured.

In addition, according to an embodiment of the present disclosure, since the air diffuser configured to diffuse air in the form of fine bubbles is provided and air is reacted with the basic alkaline mixture solution that serves as a catalyst for collecting carbon dioxide, there is an advantage that the efficiency of collecting carbon dioxide in air may be increased.

In addition, according to an embodiment of the present disclosure, by using the basic alkaline mixture solution, the disadvantages of the aqueous alkanolamine solution which is a carbon dioxide absorber and which is widely used in the conventional technology are solved and also the present disclosure forms the surrounding air to be clean and comfortable, so that there is an advantage that the present disclosure has a low operation cost.

In addition, according to an embodiment of the present disclosure, there is an advantage that the local government or the manager is capable of being appropriately responding to the changes in the carbon dioxide concentration in air according to the collection of carbon dioxide in air.

### Description of Drawings

FIG. 1 is a cross-sectional view schematically illustrating a system for creating an artificial forest according to an embodiment of the present disclosure.
FIG. 2 is a plan view illustrating the system for creating the artificial forest according to an embodiment of the present disclosure.
FIG. 3 is a side view illustrating the system for creating the artificial forest according to an embodiment of the present disclosure.
FIG. 4 is a side view specifically illustrating the system for creating the artificial forest according to an embodiment of the present disclosure.
FIG. 5 is an internal cross-sectional view illustrating a state in which a plurality of air diffusers according to an embodiment of the present disclosure is disposed.
FIG. 6 is an enlarged cross-sectional view illustrating a portion where the air diffuser according to an embodiment of the present disclosure is mounted.
FIG. 7 shows an air diffusing plate of the air diffuser according to an embodiment of the present disclosure.
FIG. 8 is a view illustrating an inlet portion into which a basic alkaline mixture solution according to an embodiment of the present disclosure is introduced.
FIG. 9 is a view illustrating a separator according to an embodiment of the present disclosure, the separator collecting a carbon dioxide reactant.
FIG. 10 is a view illustrating a configuration for managing the system for creating the artificial forest according to an embodiment of the present disclosure.
FIG. 11 is a view illustrating data items that can be provided through the system for creating the artificial forest according to an embodiment of the present disclosure.
FIG. 12 shows results before and after carbon dioxide collection of the basic alkaline mixture solution according to an embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

Hereinafter, the present disclosure will be described in detail.

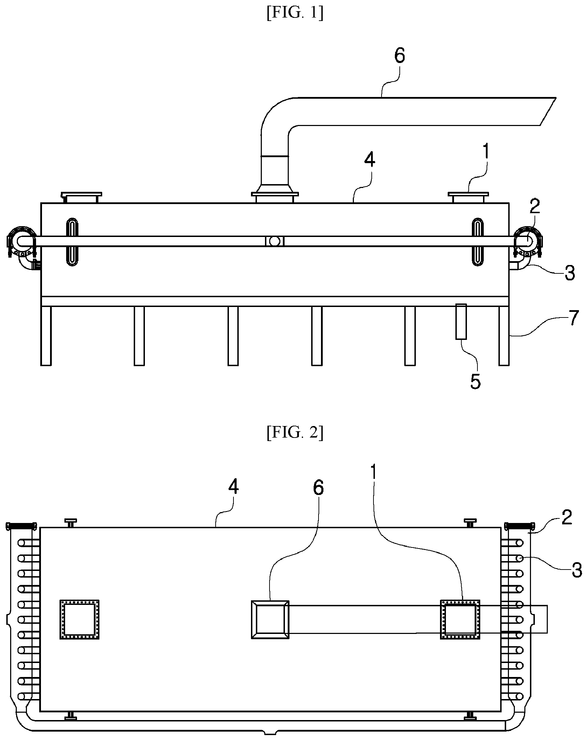

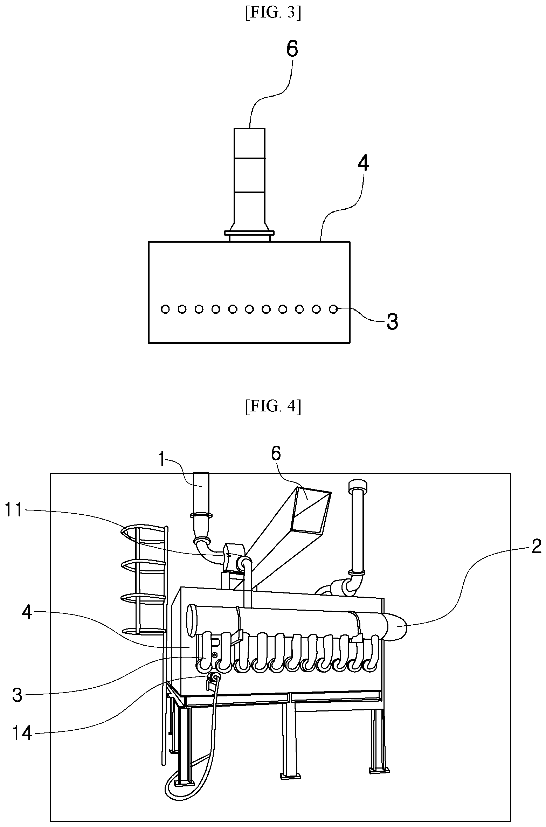

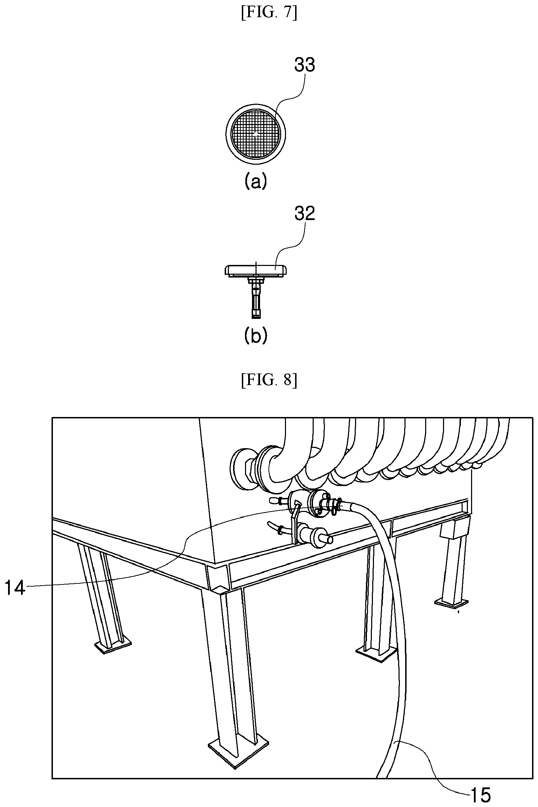

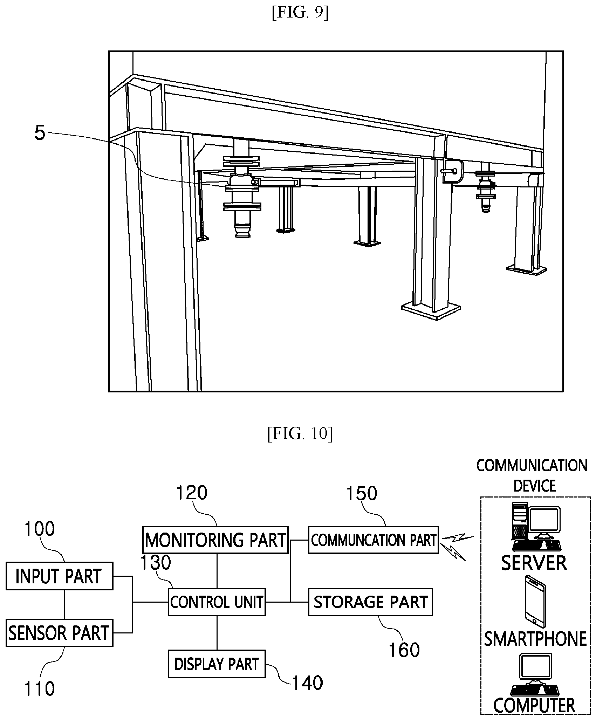

FIG. 1 is a front cross-sectional view illustrating a system for creating an artificial forest according to the present disclosure, FIG. 2 is a plan view illustrating the system for creating the artificial forest according to an embodiment of the present disclosure, FIG. 3 is a side view illustrating the system for creating the artificial forest according to an embodiment of the present disclosure, FIG. 4 is a side view specifically illustrating the system for creating the artificial forest according to an embodiment of the present disclosure, FIG. 8 is a view illustrating an inlet portion into which a basic alkaline mixture solution is introduced according to an embodiment of the present disclosure, and FIG. 9 is a view illustrating a separator collecting a carbon dioxide reactant according to an embodiment of the present disclosure.

Referring to FIG. 1 to FIG. 4, a system for creating an artificial forest according to an embodiment of the present disclosure may include a suction pipe 1, a circulation pipe 2, an air diffuser 3, a chamber 4, a separator 5, a discharge pipe 6, and a carbon resource storage (not illustrated).

The suction pipe 1 includes at least a plurality of suction pipes 1, serves to suction ambient air outside the chamber 4, and serves to supply the suctioned air to the circulation pipe 2. To this end, as illustrated in FIG. 4, a suction pump 11 may be formed at the middle or a distal end of the suction pipe 1 so that outside air is capable of being forcefully suctioned into the suction pipe 1.

As illustrated in FIG. 2, the circulation pipe 2 is formed such that the circulation pipe 2 surrounds the outer circumference of the chamber 4, and forms a passage through which air suctioned from the suction pipe 1 passes and the air is circulated. In addition, the inner portion of the circulation pipe 2 is connected to both distal ends of the air diffuser 3.

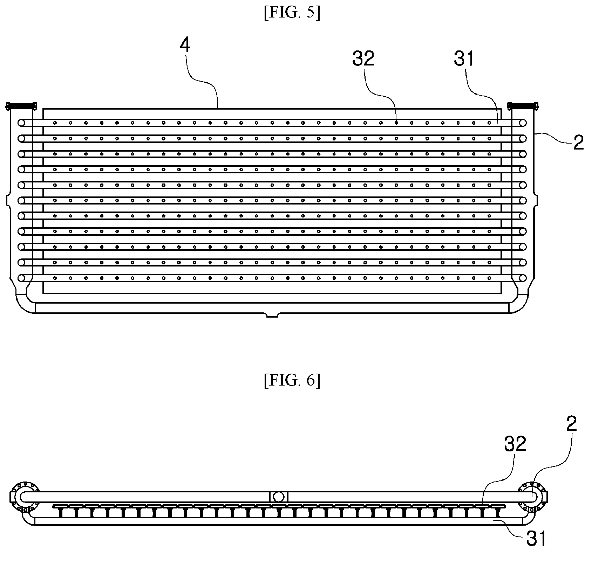

The air diffuser 3 is an apparatus for diffusing air, includes an air diffusing pipe and an air diffusing plate. Furthermore, the air diffuser 3 includes a plurality of air diffusers 3, and the plurality of air diffusers 3 is branched from the circulation pipe 2 and serves to diffuse and supply air in the form of fine bubbles into the chamber 4. Specifically, for this purpose, the middle portion of the air diffuser 3 may be connected to the chamber 4 by penetrating the inner portion of the chamber 4 as illustrated in FIG. 5, and the both distal ends of the air diffuser 3 may be in communication with the inner portion of the circulation pipe 2. Such an air diffuser 3 will be described in detail with reference to FIG. 5 to FIG. 7 which will be described later.

A basic alkaline mixture solution is stored inside the chamber 4. Specifically, the basic alkaline mixture solution is a catalyst that collects carbon dioxide contained in air. Specifically, an inlet portion 14 into which the basic alkaline mixture solution is introduced may be formed on an outside of the chamber 4, and the basic alkaline mixture solution mixed by a mixer (not illustrated) may be introduced into and stored in the chamber 4 through a nozzle connected to the inlet portion 14.

In addition, the chamber 4 may include a level indicator inside the chamber 4, so that a level of a solution in an absorption tower is capable of being detected.

The mixer may mix the basic alkaline mixture solution supplied from a reservoir in which a basic alkaline solution is stored with water supplied from a water supply source, and may supply the basic alkaline mixture solution to a nozzle 15 connected to the inlet portion 14 of the chamber 4 as illustrated in FIG. 8.

The basic alkaline solution and the water may be mixed in a ratio of 1:1 to 1:5. For example, the basic alkaline solution and the water may be mixed in a ratio of 1:1 to 1:4, 1:1 to 1:3, 1: 1 to 1:2, 1:2 to 1:5, 1:2 to 1:3, or 1:3 to 1:5.

A collection rate of carbon dioxide in air may be increased as the basic alkaline mixture solution mixing ratio of the basic alkaline solution and the water is increased, but mixing ratio of the water may be adjusted in consideration of the cost aspect.

The basic alkaline mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source may include all water readily available at a system mounting site.

An average pH of the basic alkaline mixture solution may be at least pH 12. For example, the pH may be pH 12 to pH 13.5, pH 13, pH 12, pH 12.1, pH 12.2, or pH 12.3. The pH of the basic alkaline mixture solution may be measured by a pH meter in the chamber 4, and collection of carbon dioxide is no longer possible when the pH of the basic alkaline mixture solution in the chamber 4 is less than pH 10.5. Therefore, in order to adjust the pH of the basic alkaline mixture solution, the amount of the basic alkaline solution and the amount of water may be adjusted from zero to 100% and the basic alkaline solution and the water may be supplied to the mixer, and the basic alkaline solution and the water may be supplied through a nozzle connected to the inlet portion 14 of the chamber 4.

When the level of the basic alkaline mixture solution in the chamber 4 is lowered to less than 90%, the basic alkaline mixture solution may be input by being adjusted through the valve in the mixer. Furthermore, when the level of the basic alkaline mixture solution becomes 100%, inputting of the basic alkaline mixture solution may be stopped and, at the same time, the basic alkaline solution and water may be mixed until the pH of the basic alkaline mixture solution becomes pH 12 to pH 13.5.

In order to maintain the system for creating the artificial forest capable of continuously collecting carbon dioxide in air, the amount of the basic alkaline mixture solution supplied to the chamber 4 and the amount of a solution discharged from the separator 5 are required to be the same. Therefore, a net flow may become zero by adjusting the valve (including a by-pass valve, if necessary) such that the amount of the basic alkaline mixture solution equal to a value of a flow meter mounted in a line from the chamber 4 to the separator 5 is supplied to the chamber 4.

The chamber 4 is branched from the circulation pipe 2, and is configured to a reactant containing carbon dioxide by reacting air in the form of fine bubbles supplied from the plurality of air diffusers 3 with the pre-stored basic alkaline mixture solution introduced through the inlet portion 14 of the chamber 4. Furthermore, a carbon dioxide reactant and a waster solution in the reactant is moved to the separator 5 as illustrated in FIG. 9 through the valve.

The separator 5 is configured to separate the carbon dioxide reactant and the waste solution in the reactant. For example, the separator 5 may be configured to perform the separation by using a centrifugal separation method.

The carbon resource storage (not illustrated) may store the carbon dioxide reactant separated by the separator 5, and may recycle the carbon dioxide reactant by recycling the carbon dioxide reactant for other purposes. For example, the carbon dioxide reactant may include sodium carbonate (Na₂CO₃) or sodium bicarbonate (NaHCO₃).

The system for creating the artificial forest is a system used on land. Furthermore, in the system for creating the artificial forest, since securing of a place for storing a carbon dioxide reactant is easily realized, the carbon dioxide reactant may be separated and stored in the carbon resource storage so as to recycle the carbon dioxide reactant into other useful materials.

As described in Formula 1 below, the carbon dioxide reactant may be formed by reacting the basic alkaline mixture solution with carbon dioxide.

<Formula 1> 2NaOH + CO₂ → Na₂CO₃ + H₂O Na₂CO₃ + H₂O + CO₂ → 2NaHCO₃

In the reactant, a waste solution other than the carbon dioxide reactant is moved to a wastewater treatment tank (not illustrated) and then is discarded. For example, the waste solution may include illite minerals, water, and so on that are contained in the basic alkaline mixture solution that has finished a catalyst function.

In addition, in the chamber 4, carbon dioxide is collected by reacting air in the form of fine bubbles supplied from the plurality of air diffusers 3 with the basic alkaline mixture solution contained in the chamber 4, and then a residual air in which carbon dioxide is removed is discharged through the discharge pipe 6. For example, the residual air discharged through the discharge pipe 6 may include air in which carbon dioxide is removed and may include some small amounts of uncollected carbon dioxide.

Meanwhile, FIG. 5 is an internal cross-sectional view illustrating a state in which the plurality of air diffusers according to an embodiment of the present disclosure is disposed, FIG. 6 is an enlarged cross-sectional view illustrating a portion where the air diffuser according to an embodiment of the present disclosure is mounted, and FIG. 7 shows an air diffusing plate of the air diffuser according to an embodiment of the present disclosure.

Referring to FIG. 5 to FIG. 7, the air diffuser 3 is an apparatus that finely diffuses air inside the chamber 4 in which the basic alkaline mixture solution is stored, and may be provided with an air diffusing pipe 31 branched from the circulation pipe 2 and may be provided with an air diffusing plate 32 configured to diffuse air discharged from the air diffusing pipe 31 such that the air in the form of fine bubbles is diffused to the basic alkaline mixture solution stored in the chamber 4.

Here, as illustrated in FIG. 6 and FIG. 7, the air diffusing plate 32 is fastened to a nipple of the air diffusing pipe 31 through a socket, and a membrane disk 33 having a stretchable material and having a surface provided with a plurality of air diffusing holes is mounted on the air diffusing plate 32. The air diffusing plates 32 are arranged and mounted in a row on the air diffusing pipe 31 at predetermined intervals. Furthermore, the larger the number of air diffusing plates 32 is arranged and mounted on the air diffusing pipe 31, the more air in the form of fine bubbles formed through the membrane disks 33 is generated, so that the efficiency of collecting carbon dioxide is increased as the larger the number of air diffusing plates 32 is arranged.

It is preferable that the membrane disk 33 includes a coating layer of 20 nm to 50 nm of polytetrafluoroethylene (PTFE) made of Teflon on a surface of the membrane disk 33 including an inner surface of a fine air diffusing hole 20A so as to minimize attachment of contaminants.

Due to the characteristics of PTFE, PTFE has a very good heat resistance and a very good tolerability. Furthermore, PTFE has a property that the attachment of contaminants is not well realized due to low friction coefficient and low adhesiveness of PTFE.

Therefore, since the coating layer minimizes contaminants from being attached to the inner surface of the fine air diffusing hole and the surface of the membrane, deterioration of a function of the membrane that is in contact with the basic alkaline mixture solution stored in the chamber 4 is capable of being minimized and the use period of the membrane may be secured as long as possible.

As described above, the reliability of the membrane may be increased as much as possible, and there is also an excellent economic feasibility condition due to securing a long period of use.

In addition, as illustrated in FIG. 5, the middle portions of the plurality of air diffusers 3 are connected to the chamber 4 by penetrating the inner portion of the chamber 4, and both distal ends of the plurality of air diffusers 3 are in communication with the inner portion of the circulation pipe 2 and are inserted into the inner portion of the circulation pipe 2 surrounding the outer circumference of the chamber 4. Through this, the air diffusers 3 are capable of finely and uniformly diffusing air containing carbon dioxide suctioned from outside through the suction pipe 1, thereby being capable of reacting the air with the basic alkaline mixture solution in the chamber 4. Accordingly, an effect of increasing the efficiency of collecting carbon dioxide may be realized.

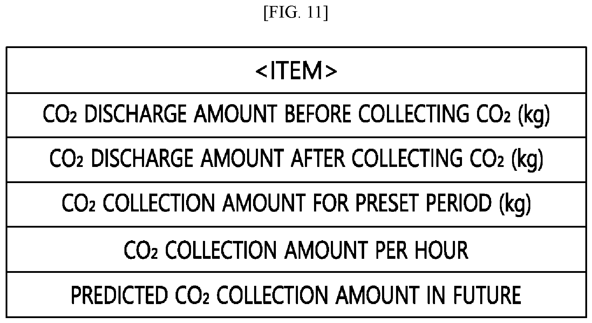

Meanwhile, FIG. 10 is a view illustrating a configuration for managing the system for creating the artificial forest according to an embodiment of the present disclosure, and FIG. 11 is a view illustrating data items that can be provided through the system for creating the artificial forest according to an embodiment of the present disclosure.

Referring to FIG. 10 to FIG. 11, the system for creating the artificial forest may further include: an input part 100 configured to input a collection date of carbon dioxide, a time, a measurement interval, a measurement start time for measuring a carbon dioxide concentration value, a measurement end time for ending the measurement of the carbon dioxide concentration value, a measurement period, and an atmospheric pressure; a sensor part 110 configured to measure, at the measurement interval, a carbon dioxide concentration value in air suctioned through the suction pipe 1 and a carbon dioxide concentration value after collecting carbon dioxide and to transmit the carbon dioxide concentration values to a control unit 130; a monitoring part 120 configured to monitor a level and a pH of the basic alkaline mixture solution in the chamber 4; the control unit 130 configured to adjust a supply amount of the basic alkaline mixture solution by the monitoring part 120 and to control an operation of each part by determining a sensor value measured from the sensor part 110; a storage part 160 configured to store the carbon dioxide concentration value in air and the carbon dioxide concentration value after collecting carbon dioxide that are measured at the measurement interval, and a concentration change amount before and after collecting carbon dioxide; a communication part 160 configured to remotely transmit the carbon dioxide concentration value in air, the carbon dioxide concentration value after collecting carbon dioxide, and the concentration change amount before and after collecting carbon dioxide that are stored in the storage part 160 in real time or at regular intervals to a server or a terminal that a user desires; and a display part 140 configured to display the carbon dioxide concentration value in air and the carbon dioxide concentration value after collecting carbon dioxide measured by the sensor part 110 at the measurement interval, and the concentration change amount before and after collecting carbon dioxide.

Values of a gas meter, a pH meter, and a flow meter measured in all processes of the system for creating the artificial forest is managed in the monitoring part 120, the carbon dioxide concentration value in air suctioned through the suction pipe 1 and the carbon dioxide concentration value after collecting carbon dioxide in which the basic alkaline mixture solution and the air containing carbon dioxide are reacting with each other in the chamber 4 are measured from the sensor part 110, and the control unit 130 is adjusted on the basis of the values measured from the monitoring part 120 and the sensor part 110.

That is, the control unit 130 may adjust the supply amount of the basic alkaline mixture solution by the monitoring part 120, and may control the operation of each part by determining the sensor value measured from the sensor part 110.

In addition, when the user inputs a carbon dioxide collection date, a time, a measurement interval, a measurement start time for measuring a carbon dioxide concentration value, a measurement end time for ending the measurement of the carbon dioxide concentration value, a measurement period, and an atmospheric pressure through the input part 100, the control unit 130 may control the operation of each part of the system for creating the artificial forest of the present disclosure on the basis of the input values input through the input part 100.

The storage part 160 may store items, as illustrated in FIG. 11, measured from the sensor part 110 and the monitoring part 120 in a database. Specifically, the items may include at least a carbon dioxide emission amount before carbon dioxide is collected, a carbon dioxide emission amount after carbon dioxide is collected, a carbon dioxide collection amount for a preset period, a carbon dioxide collection amount per hour, and a predicted amount of carbon dioxide collection amount for a predetermined period in the future.

Since the communication part 150 is capable of remotely transmitting the values according to the items stored in the storage part 160 in real time or at regular intervals to the server or the terminal that the user desires, a local government or a manager in a region where the system for creating the artificial forest is established is capable of remotely checking the change amount in carbon dioxide collection and the predicted amount of carbon dioxide collection in the future according to the operation of the system for creating the artificial forest through a communication device including a server, a smartphone, a computer terminal, and so on.

The display part 140 is a display apparatus mounted adjacent to the system for creating the artificial forest, and may display the values according to the items which are measured from the sensor part 110 and the monitoring part 120 and which are stored in the storage part 160.

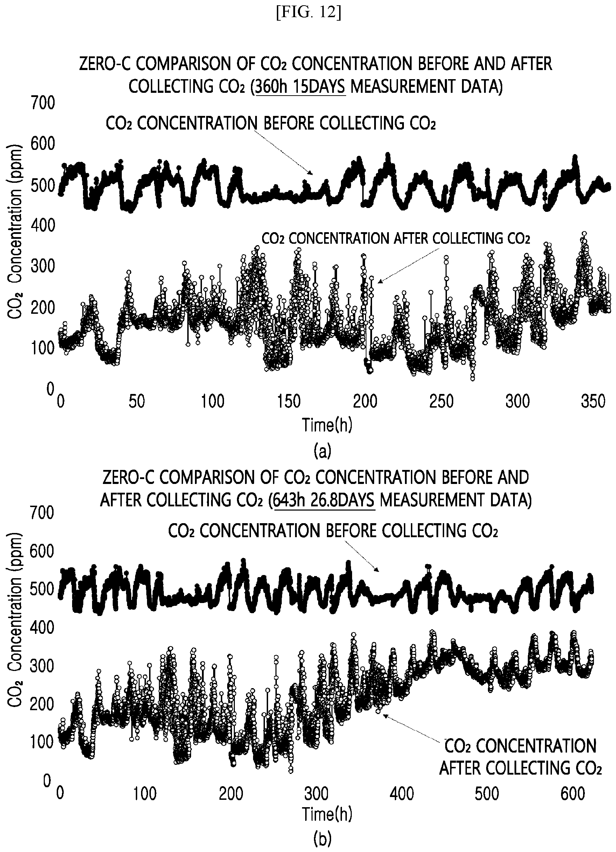

FIG. 12 shows results before and after carbon dioxide collection of the basic alkaline mixture solution according to an embodiment of the present disclosure.

Referring to FIG. 12, an embodiment of FIG. 12(a) is a graph showing a 360-hour (15-day) CO₂ collection amount, and an embodiment of FIG. 12(b) is a graph showing a 623-hour (25.95-day) CO₂ collection amount. In the two graphs, points displayed at upper ends of the graphs are CO₂ emission amounts before the collection of carbon dioxide, and points displayed at lower ends of the graphs are CO₂ emission amounts after the collection of carbon dioxide at the predetermined measurement interval.

Here, the CO₂ emission amounts before the collection of carbon dioxide refer to amounts of carbon dioxide contained in air passing through the suction pipe 1, and the CO₂ emission amounts after the collection of carbon dioxide refer to amounts of carbon dioxide contained in a residual air discharged through the discharge pipe 6 after air in the form of fine bubbles passes through the suction pipe 1, the circulation pipe 2, and the air diffuser 3 and reacts with the basic alkaline mixture solution stored in the chamber 4 and then the amount of collected carbon dioxide is removed.

That is, looking at the two graphs in FIG. 12, since the CO₂ emission amount after the collection of carbon dioxide (shown at the lower ends) has a carbon dioxide emission amount significantly smaller than the CO₂ emission amount before the collection of carbon dioxide (shown at the upper ends), it can be confirmed that the collection effect of the system for creating the artificial forest using the basic alkaline mixture solution is good.

For reference, the present applicant will commercialize and market the system for creating the artificial forest of the present disclosure.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

The present disclosure may provide a system for creating an artificial forest, the system being capable of efficiently reducing carbon dioxide emitted into air and also being capable of recycling carbon dioxide into other useful materials, and the system being also capable of continuously supplying a clean air that is artificially purified.

In addition, according to the present disclosure, since a local government or a manager in a jurisdiction may easily check changes in carbon dioxide concentration value before and after carbon dioxide is collected, the local government or the manager in the jurisdiction may appropriately use the checked values or may appropriately respond to the changes in carbon dioxide concentration value.

Since the possibility of marketing or sales of the system for creating the artificial forest to governments and local governments of each country that are making various efforts to reduce greenhouse gas emissions is not only sufficient and is also practically achievable, the present disclosure has industrial applicability.

## Claims

1. A system for creating an artificial forest, the system comprising:
a suction pipe configured to suction air;
a circulation pipe forming a passage through which air suctioned from the suction pipe is circulated;
a plurality of air diffusers branched from the circulation pipe and configured to diffuse and supply air in a form of fine bubbles in a chamber;
the chamber configured to collect carbon dioxide in air by reacting the air in the form of fine bubbles supplied from the plurality of air diffusers and a pre-stored basic alkaline mixture solution with each other;
a separator configured to collect a reactant containing carbon dioxide collected in the chamber and to separate a carbon dioxide reactant and a waster solution from the reactant;
a carbon resource storage configured to store the separated carbon dioxide reactant for recycling the carbon dioxide reactant; and
a discharge pipe configured to discharge a residual air in which carbon dioxide collected in the chamber is removed.

2. The system of claim 1, wherein the suction pipe has a first side coupled to the circulation pipe, and is configured to suction air through a suction pump formed in a middle portion of the suction pipe.

3. The system of claim 1, wherein the circulation pipe is formed such that the circulation pipe surrounds an outer circumference of the chamber.

4. The system of claim 1, wherein each middle portion of the plurality of air diffusers penetrates the chamber and is connected to the chamber, and both distal ends of the plurality of air diffusers are in communication with an inner portion of the circulation pipe.

5. The system of claim 1, wherein the plurality of air diffusers is an apparatus configured to diffuse air into the basic alkaline mixture solution and provided with an air diffusing pipe and an air diffusing plate, and a membrane disk having a stretchable material and having a surface provided with a plurality of air diffusing holes is mounted on the air diffusing plate.

6. The system of claim 1, wherein an inlet portion into which the basic alkaline mixture solution is introduced is formed on an outside of the chamber, and the basic alkaline mixture solution mixed by a mixer is introduced into and stored in the chamber through a nozzle connected to the inlet portion.

7. The system of claim 6, wherein the mixer is configured to mix a basic alkaline solution supplied from a basic alkaline solution reservoir with water supplied from a water supply source.

8. The system of claim 7, wherein the basic alkaline solution and the water are mixed in a ratio of 1:1 to 1:5.

9. The system of claim 1, wherein an average pH of the basic alkaline mixture solution is pH 12 to pH 13.5.

10. The system of claim 1, wherein the basic alkaline mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

11. The system of claim 6, wherein the basic alkaline mixture solution is input by being adjusted through a valve in the mixer when a level of the basic alkaline mixture solution in the chamber is lowered to less than 90%, and inputting of the basic alkaline mixture solution is stopped and, at the same time, a basic alkaline solution and water are mixed until a pH of the basic alkaline mixture solution becomes pH 12 to pH 13.5 when the level of the basic alkaline mixture solution becomes 100%.

12. The system of claim 1, wherein the carbon dioxide reactant comprises sodium carbonate (Na₂CO₃) or sodium bicarbonate (NaHCO₃).

13. The system of claim 1 further comprising:
an input part configured to input a collection date of carbon dioxide, a time, a measurement interval, a measurement start time for measuring a carbon dioxide concentration value, a measurement end time for ending the measurement of the carbon dioxide concentration value, a measurement period, and an atmospheric pressure;
a sensor part configured to measure, at the measurement interval, a carbon dioxide concentration value in air suctioned through the suction pipe and a carbon dioxide concentration value after collecting carbon dioxide and to transmit the carbon dioxide concentration values to a control unit;
a monitoring part configured to monitor a level and a pH of the basic alkaline mixture solution in the chamber;
the control unit configured to adjust a supply amount of the basic alkaline mixture solution by the monitoring part and to control an operation of each part by determining a sensor value measured from the sensor part;
a storage part configured to store the carbon dioxide concentration value in air and the carbon dioxide concentration value after collecting carbon dioxide that are measured at the measurement interval, and a concentration change amount before and after collecting carbon dioxide;
a communication part configured to remotely transmit the carbon dioxide concentration value in air, the carbon dioxide concentration value after collecting carbon dioxide, and the concentration change amount before and after collecting carbon dioxide that are stored in the storage part in real time or at regular intervals to a server or a terminal that a user desires; and
a display part configured to display the carbon dioxide concentration value in air and the carbon dioxide concentration value after collecting carbon dioxide that are measured by the sensor part at the measurement interval, and the concentration change amount before and after collecting carbon dioxide.
